# EUROPÄISCHE PATENTSCHRIFT

(11) **EP 2 207 960 B1**
(45) Veröffentlichungstag und Bekanntmachung des Hinweises auf die Patenterteilung: **18.05.2011**
(21) Anmeldenummer: 08805259.2
(22) Anmeldetag: 13.10.2008
(51) Int. Cl.: F04B 1/04, F04B 53/10, F16K 15/02

(54) **ALS RÜCKSCHLAGVENTIL AUSGEBILDETES EINLASSVENTIL, KOLBENPUMPE SOWIE MONTAGEVERFAHREN.**
ONE-WAY INTAKE VALVE, PISTON PUMP AND ASSEMBLY METHOD
CLAPET D'ADMISSION DE NON-RETOUR, POMPE À PISTON ET PROCÉDÉ DE MONTAGE

(30) Priorität: 06.11.2007 DE 102007052756
(43) Veröffentlichungstag der Anmeldung: 21.07.2010
(73) Patentinhaber: Robert Bosch GmbH, 70442 Stuttgart (DE)
(72) Erfinder: HERMANN, Harald, 71292 Friolzheim (DE)
(86) Internationale Anmeldenummer: PCT/EP2008/063742
(87) Internationale Veröffentlichungsnummer: WO 2009/059871

(56) Entgegenhaltungen:
- WO-A-2004/072478
- DE-A1- 3 509 260
- DE-A1- 19 732 770
- DE-A1- 19 747 850
- DE-A1-102005 042 197

## Beschreibung

### Stand der Technik

Die Erfindung betrifft ein als Rückschlagventil ausgebildetes Einlassventil gemäß Anspruch 1, eine Kolbenpumpe für eine hydraulische Bremsanlage gemäß dem Oberbegriff des Anspruchs 8 sowie ein Montageverfahren gemäß Anspruch 9.

Kolbenpumpen werden in hydraulischen Bremsanlagen von Kraftfahrzeugen eingesetzt und häufig als Rückförderpumpen bezeichnet Sie dienen bei einer Schlupfregelung dazu, den Bremsdruck in den Radbremszylindern wahlweise abzusenken oder zu erhöhen, um so den Bremsdruck in den Radbremszylindern regeln zu können.

Die DE 35 09 260 A1 offenbart ein als Rückschlagventil ausgebildetes Ventil mit einem Ventilfuß und einem Ventilschaft. Dieser Ventilschaft nimmt in seinem Inneren einen Verschlusskörper vollständig auf. Ventilschaft und Ventilfuß sind einteilig ausgeführt und bestehen aus einer Elastomermischung die in einem Vulkanisationsprozess verarbeitet wird. Im noch heißen Zustand nach der Vulkanisation wird der Verschlusskörper durch eine Einlassbohrung oder einen Auslasskanal in den Ventilschaft eingebracht.

Die DE 197 32 770 A1, die als nächstliegender Stand der Technik angesehen wird, zeigt eine Kolbenpumpe mit einem als Rückschlagventil ausgebildeten Einlassventil, wobei das Einlassventil einen topfförmigen, als Tiefziehteil aus Blech ausgebildeten, Einlassventildeckel aufweist. Der Einlassventildeckel wird mittels einer Rückstellfeder für einen Pumpenkolben in axialer Richtung federkraftbeaufschlagt. Innerhalb des Einlassventildeckels sind ein Schließfederelement sowie ein Schließkörper angeordnet. Der Schließkörper wird von dem Schließfederelement auf einen Ventilsitz federkraftbeaufschlagt, der stirnseitig an dem Pumpenkolben angeordnet ist.

Daneben sind Kolbenpumpen bekannt geworden, bei denen der topfförmige Einlassventildeckel als Kunststoffelement ausgebildet ist und bei denen der Ventilsitz des Einlassventils nicht unmittelbar am Pumpenkolben angeordnet ist, sondern an einem von dem Einlassventildeckel separaten, am Pumpenkolben festgelegten, Einlassventilsitzelement. Die Montage der bekannten Kolbenpumpen ist aufwändig, da der Einlassventildeckel und das Einlassventilsitzelement separat voneinander montiert werden müssen. Zudem ist die Herstellung der Einzelbauteile (Einlassventildeckel und Einlassventilsitzelement) kostenintensiv.

### Offenbarung der Erfindung

### Technische Aufgabe

Der Erfindung liegt die Aufgabe zugrunde, eine einfach montierbare Kolbenpumpe vorzuschlagen, deren Bauteile noch dazu kostengünstig herstellbar sind. Ferner besteht die Aufgabe darin, ein Kunststoffelement als Bauteil einer Kolbenpumpe vorzuschlagen, durch dessen Verwendung die Montage der Kolbenpumpe vereinfacht wird. Weiterhin besteht die Aufgabe darin, ein vereinfachtes Montageverfahren für eine Kolbenpumpe, insbesondere für das Einlassventil der Kolbenpumpe, vorzuschlagen.

### Technische Lösung

Diese Aufgabe wird hinsichtlich des als Rückschlagventil ausgebildeten Einlassventils mit den Merkmalen des Anspruchs 1, hinsichtlich der Kolbenpumpe mit den Merkmalen des Anspruchs 7 und hinsichtlich des Montageverfahrens mit den Merkmalen des Anspruchs 9 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen. Zur Vermeidung von Wiederholungen sollen rein vorrichtungsgemäß offenbarte Merkmale als verfahrensgemäß offenbart gelten und beanspruchbar sein. Ebenso sollen rein verfahrensgemäß offenbarte Merkmale als vorrichtungsgemäß offenbart gelten und beanspruchbar sein.

Der Erfindung liegt der Gedanke zugrunde, die im Betrieb der Kolbenpumpe separaten Kunststoffbauteile Einlassventildeckel und Einlassventilsitzelement als einteiliges Kunststoffelement zu fertigen, wobei das einteilige Kunststoffelement mindestens eine Sollbruchstelle aufweist, durch deren Trennung das Kunststoffelement in die voneinander separaten Bauteile Einlassventildeckel und Einlassventilsitzelement aufgeteilt wird. Die Ausbildung des, vorzugsweise topfförmigen, Einlassventildeckels und des Einlassventilsitzelementes in einem zunächst einteiligen Kunststoffelement, das vorzugsweise erst während der Montage, insbesondere automatisch, durch Trennen der Sollbruchstelle aufgeteilt wird in den Einlassventildeckel und das von dem Einlassventildeckel separate Einlassventilsitzelement, bringt eine Reihe von Vorteilen mit sich. So ist die Fertigung eines einteiligen Kunststoffelementes wesentlich kostengünstiger als die separate Fertigung eines Einlassventildeckels und eines Einlassventilsitzelementes. Ferner wird die Montage einer Kolbenpumpe durch den Einsatz eines derartigen Kunststoffelements wesentlich erleichtert, da nicht zwei separate Bauteile, sondern lediglich ein einteiliges Kunststoffelement gehandhabt werden muss. Ferner wird durch die einteilige Ausbildung des Kunststoffelementes sichergestellt, dass die Bestandteile Einlassventildeckel und Einlassventilsitzelement aus exakt dem gleichen Material ausgebildet sind, was bei einer separaten Fertigung nur schwer realisierbar ist. Hierdurch wird ein identisches Verschleißverhalten der Bauteile garantiert.

Von besonderem Vorteil ist eine Ausführungsform des einteiligen Kunststoffelementes, bei der dieses als Spritzgussteil hergestellt wird. Die Fertigung des Kunststoffelementes als Spritzgussteil ermöglicht es, enge Toleranzen auf einfache Weise einzuhalten und das Kunststoffelement als schüttgutfähiges Massenbauteil herzustellen.

Von Vorteil ist eine Ausführungsform des einteiligen Kunststoffelementes, bei der die mindestens eine Sollbruchstelle derart ausgebildet und/oder angeordnet ist, dass sie bei der Montage automatisch aufgetrennt wird. Insbesondere sollte die Materialstärke der mindestens einen Sollbruchstelle (Materialschwächung) derart bemessen sein, dass die Sollbruchstelle bei dem bzw. durch das Beaufschlagen des Kunststoffelementes bzw. des, insbesondere topfförmigen, Einlassdeckels mit einer Federkraft einer Rückstellfeder für einen Pumpenkolben der Kolbenpumpe getrennt wird. Anders ausgedrückt muss die mindestens eine Sollbruchstelle derart schwach ausgebildet werden, dass die Federkraft der Rückstellfeder ausreicht, die Sollbruchstelle zu durchtrennen und somit das Kunststoffelement in den Einlassventildeckel und das davon separate Einlassventilsitzelement aufzuteilen.

Um bei einer einteiligen Ausbildung des Einlassventildeckels und des Einlassventilsitzelementes eine Montage des Schließfederelementes und des Schließkörpers des Einlassventils zu ermöglichen, ist in Weiterbildung der Erfindung vorgesehen, dass der, insbesondere topfförmige, Einlassventildeckel mindestens zwei in Umfangsrichtung benachbarte Umfangswandabschnitte aufweist, von denen zumindest ein Umfangswandabschnitt in radialer Richtung, vorzugsweise elastisch, aufbiegbar ist. Durch das Aufbiegen zumindest eines Umfangswandabschnittes in radialer Richtung wird eine (axiale) Montageöffnung gebildet bzw. erweitert, so dass der Schließkörper und das Schließfederelement des Einlassventils der Kolbenpumpe in axialer Richtung in das einteilige Kunststoffelement eingeführt werden können.

Besonders bevorzugt sind sämtliche Umfangswandabschnitte des Einlassventildeckels in radialer Richtung aufbiegbar, vorzugsweise derart, dass sie nach dem Aufbiegevorgang und der Montage des Schließkörpers und des Schließfederelementes automatisch wieder, zumindest näherungsweise, in ihre Ursprungslage zurückfedern. Besonders bevorzugt ist eine Ausführungsform, bei der die Umfangswandabschnitte im Bereich ihres freien Endes auch jeweils einen Bodenabschnitt des Einlassventildeckels bilden, an dem sich bevorzugt das Schließfederelement des Einlassventils nach seiner Montage in axialer Richtung abstützt, um den Schließkörper in Richtung des Einlassventilsitzelementes federkraftzubeaufschlagen.

Um ein möglichst leichtes Aufbrechen der Sollbruchstelle bei der Montage des einteiligen Kunststoffelementes sicherzustellen, ist eine Ausführungsform des Kunststoffelementes bevorzugt, bei der die Sollbruchstelle zwischen dem Einlassventildeckel und dem Einlassventilsitzelement als radiale Verbindung zwischen diesen beiden Bauteilen bzw. Abschnitten des zunächst einstückigen Kunststoffelementes ausgebildet ist. Besonders bevorzugt ist eine Ausführungsform, bei der das Einlassventilsitzelement im Bereich der Sollbruchstelle axial in den Einlassventildeckel hineinragt. Wird der Einlassventildeckel bei einer derartig ausgebildeten Sollbruchstelle in axialer Richtung, beispielsweise mit Hilfe oder mit Unterstützung der Rückstellfeder für den Kolben kraftbeaufschlagt, bricht die Sollbruchstelle und der Einlassventildeckel wird axial in Richtung des Einlassventilsitzelementes verstellt, bis der Einlassventildeckel, insbesondere stirnseitig, an dem Einlassventilsitzelement anliegt.

Im Hinblick auf die Ausformung der mindestens einen Sollbruchstelle gibt es unterschiedliche Möglichkeiten. So ist es gemäß einer ersten Alternative möglich, eine einzige, als umlaufender Ring ausgebildete, Sollbruchstelle vorzusehen. Gemäß einer zweiten Alternative ist es realisierbar, mehrere in Umfangsrichtung benachbarte Sollbruchstellen vorzusehen, wobei die in Umfangsrichtung benachbarten Sollbruchstellen bevorzugt auf einem Kreisring angeordnet sind.

Von besonderem Vorteil ist eine Ausführungsform des Kunststoffelementes, bei der an dem Einlassventildeckel eine Hochdruckdichtung angeordnet bzw. angeformt ist, die auch nach dem Trennen der Sollbruchstelle mit dem Einlassventildeckel eine Einheit bildet. Bevorzugt ist die Anlagefläche der Rückstellfeder an der Hochdruckdichtung derart ausgebildet, dass neben einer Axialkraftkomponente eine Radialkraftkomponente in radialer Richtung nach außen auf die Hochdruckdichtung wirkt, so dass die Hochdruckdichtung nach radial außen an eine Laufbuchse kraftbeaufschlagt wird, gegenüber der die Hochdruckdichtung dann einen die Rückstellfeder aufnehmenden Verdrängerraum abdichtet.

Die Erfindung führt auch auf eine Kolbenpumpe für eine hydraulische Bremsanlage eines Kraftfahrzeugs, die ein Einlassventil aufweist, das einen Einlassventildeckel und ein davon separates Einlassventilsitzelement aufweist. Erfindungsgemäß ist vorgesehen, dass der Einlassventildeckel und das Einlassventilsitzelement zunächst einteilig ausgeführt und lediglich über mindestens eine Sollbruchstelle miteinander verbunden sind, wobei durch Trennen der Sollbruchstelle die beiden Bauteile bzw. Abschnitte voneinander separiert werden, so dass für den Betrieb der Pumpe ein Einlassventildeckel und ein davon separates Einlassventilsitzelement, das mit dem Schließkörper des Einlassventils zusammenwirkt, bereitgestellt werden.

Von besonderem Vorteil ist eine Ausführungsform der Kolbenpumpe bzw. des Einlassventils der Kolbenpumpe, bei der das Schließfederelement des Einlassventils, welches vorzugsweise als Schraubenfeder ausgebildet ist, im montierten Zustand einen Zentralabschnitt des Einlassventildeckels umschließt. Anders ausgedrückt ragt ein, vorzugsweise zumindest näherungsweise zylindrischer, Zentralabschnitt im montierten Zustand der Kolbenpumpe in axialer Richtung in das Schließfederelement hinein. Das Schließfederelement verhindert somit ein ungewolltes Aufbiegen zumindest eines Umfangswandabschnittes des, vorzugsweise topfförmigen, Einlassventildeckels.

Ferner führt die Erfindung auf ein Montageverfahren zur Montage eines als Rückschlagventil ausgebildeten Einlassventils einer Kolbenpumpe bzw. auf ein Montageverfahren zur Montage der Kolbenpumpe. Erfindungsgemäß ist vorgesehen, dass ein zuvor im Detail beschriebenes, zunächst einteiliges Kunststoffelement, vorzugsweise stirnseitig, an einem Pumpenkolben der Kolbenpumpe festgelegt wird und dass das (dann noch) einteilige Kunststoffelement axial relativ zu einer Rückstellfeder bewegt wird, also die Rückstellfeder und das Kunststoffelement aufeinander zu bewegt werden, so dass diese miteinander in Kontakt kommen und dass aufgrund der dabei wirkenden Kräfte die mindestens eine Sollbruchstelle des Kunststoffelementes durchtrennt und somit der Einlassventildeckel und das Einlassventilsitzelement voneinander separiert werden.

Von besonderem Vorteil ist eine Ausführungsform des Montageverfahrens, bei dem vor dem Verfahrensschritt des Aufeinanderzubewegens der Rückstellfeder und des Kunststoffelementes der Schließkörper und das Schließfederelement des Einlassventils montiert werden. Die Montage dieser Bauteile erfolgt bevorzugt derart, dass mindestens ein Umfangswandabschnitt des Einlassventildeckels in radialer Richtung aufgebogen wird und dass daraufhin der Schließkörper und das Schließfederelement, vorzugsweise in axialer Richtung, in den Einlassventildeckel eingeführt werden. Bevorzugt erfolgt danach ein Rückstellen des mindestens einen Umfangswandabschnittes in radialer Richtung nach innen, wobei das Aufbiegen des Umfangswandabschnittes bevorzugt federelastisch erfolgt, so dass der in radialer Richtung aufgebogene Umfangswandabschnitt automatisch, vorzugsweise, zumindest näherungsweise vollständig, in seine Ursprungslage nach radial innen zurückverschwenkt.

### Kurze Beschreibung der Zeichnung

Weitere Vorteile, Merkmale und Einzelheiten der Erfindung ergeben sich aus der nachfolgenden Beschreibung eines bevorzugten Ausführungsbeispiels sowie anhand der Zeichnung:

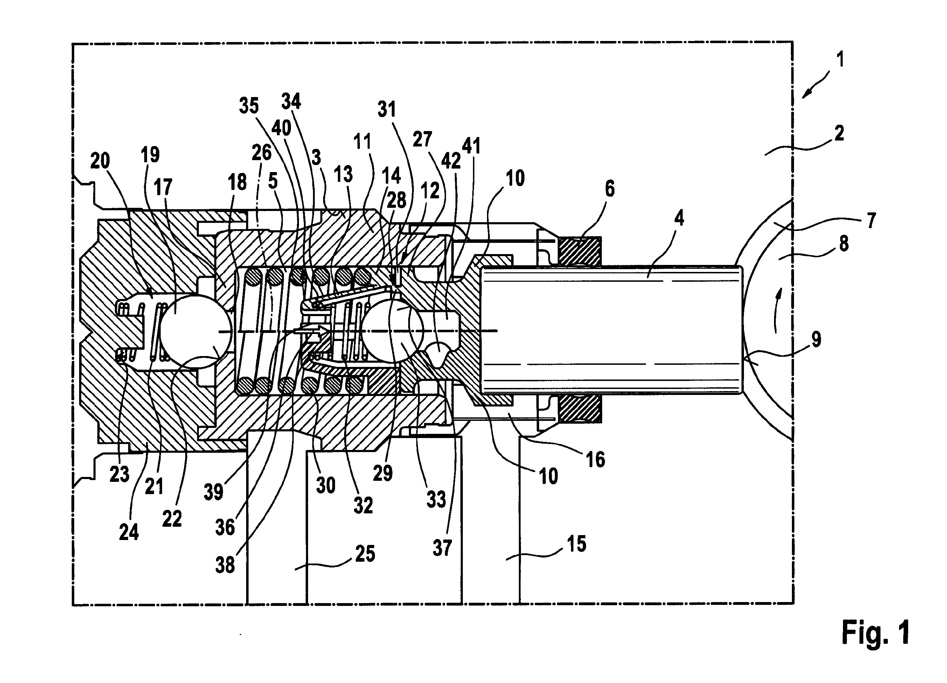

Diese zeigt in der einzigen
- Fig. 1: eine geschnittene Darstellung einer Kolbenpumpe während der Montage, wobei oberhalb einer Längs- mittelachse eine Ausführungsform mit einem ein- teiligen Kunststoffelement und unterhalb der Längsmittelachse eine Ausführungsform nach dem Stand der Technik mit einem von Anfang an von dem Einlassventilsitzelement separaten Einlassventil- deckel gezeigt ist.

### Ausführungsform der Erfindung

In der einzigen Fig. 1 ist eine Kolbenpumpe 1 gezeigt. Diese ist in einem Hydraulikblock 2 angeordnet, in dem außer der Kolbenpumpe 1 weitere, nicht dargestellte Bauteile einer eine Schlupfregelung aufweisenden hydraulischen Fahrzeugbremsanlage wie Magnetventile, Rückschlagventile und Hydrospeicher untergebracht und hydraulisch miteinander verschaltet sind. Der Hydraulikblock 2 bildet ein Pumpengehäuse der Kolbenpumpe 1. In diesen Hydraulikblock 2 ist eine mehrfach gestufte Pumpenbohrung 3 eingebracht.

Die Kolbenpumpe 1 weist einen Pumpenkolben 4 auf, dessen von einem Verdrängerraum 5 abgewandtes Ende mit einer Ringdichtung 6 gegenüber einem Excenterraum 7 abgedichtet ist. In dem Excenterraum 7 ist ein Excenter 8 rotierbar um eine senkrecht zur Längserstreckung des Pumpenkolbens 4 verlaufenden Drehachse drehbar angetrieben, wobei der Pumpenkolben 4 mit seiner dem Verdrängerraum 5 abgewandten Stirnseite 9 am Umfang des Excenters 8 anliegt, der den Pumpenkolben 4 in axialer Richtung antreibt.

Ein anderes, dem Verdrängerraum 5 zugewandtes Ende des Pumpenkolbens 4 ist kraftschlüssig mit einem Einlassventilsitzelement 10 aus Kunststoff verbunden. Dieses wiederum ist mit seinem dem Verdrängerraum 5 zugewandten Ende in einer Laufbuchse 11 aufgenommen, die mittels einer Presspassung in der Pumpenbohrung 3 sitzt. Die Presspassung bewirkt eine Abdichtung zwischen der Ein- und der Auslassseite, d. h. zwischen der Nieder- und der Hochdruckseite der Kolbenpumpe 1.

Axial an das Einlassventilsitzelement 10 des Einlassventils 12 der Kolbenpumpe 1 schließt ein topfförmiger Einlassventildeckel 13 an, der einteilig mit einer Hochdruckdichtung 14 ausgebildet ist, die radial am Innenumfang der Laufbuchse 11 anliegt und die den Verdrängerraum 5 sowohl in axialer als auch in radialer Richtung gegenüber dem Pumpeneinlass der Kolbenpumpe 1 abdichtet.

Für den Pumpeneinlass ist in dem Einlassventilsitzelement 10 ein zentrisches Sackloch 41 vorgesehen, das nahe seines Grundes von Querkanälen 42 gekreuzt wird. Das Sackloch 41 und die Querkanäle 42 kommunizieren mit einer Zuströmbohrung 15 im Hydraulikblock 2, über die Bremsfluid der Kolbenpumpe 1 zugeführt wird. Um den Eintrag von Partikeln in die Kolbenpumpe zu vermeiden, muss das Bremsfluid auf seinem Weg von der Zuströmbohrung 15 nach radial innen in das Einlassventilsitzelement 10 hinein ein Ringfilterelement 16 durchströmen.

In einem Boden 17 der Laufbuchse 11 ist zentrisch eine Öffnung 18 vorgesehen, die von einer Ventilkugel 19 eines als Rückschlagventil ausgebildeten Auslassventils 20 verschließbar ist. Dabei wird die Ventilkugel 19 von einer Auslassventilfeder 21 in axialer Richtung auf einen stirnseitig an der Laufbuchse 11 angeordneten Auslassventilsitz 22 federkraftbeaufschlagt. Die Auslassventilfeder 21 stützt sich dazu einenends am Grund 23 einer zentrischen Öffnung in einem Verschlussdeckel 24 und anderenends an der Ventilkugel 19 ab. Bei geöffnetem Auslassventil 20 kann Bremsfluid aus dem Verdrängerraum 5 über einen nicht gezeigten Radialkanal zu einem Abströmkanal 25 abströmen.

Aus Fig. 1 ist unterhalb einer Längsmittelachse 26 die Ausführungsform des Einlassventils 12 nach dem Stand der Technik gezeigt. Zu erkennen ist, dass der topfförmige Einlassventildeckel 13 als von dem Einlassventilsitzelement 10 separates Bauteil ausgebildet ist, wodurch das Einlassventilsitzelement 10 und der Einlassventildeckel 13 in separaten Montageschritten montiert werden müssen.

In der Zeichnungsebene oberhalb der Längsmittelachse 26 ist der Aufbau eines neuartigen Einlassventils 12 während der Montage gezeigt. Zu erkennen ist, dass das Einlassventilsitzelement 10 und der Einlassventildeckel 13 (zur Verdeutlichung der Erfindung noch) als einteiliges Kunststoffelement 27 ausgebildet sind, wobei die beiden Abschnitte des als Spritzgussteil ausgebildeten Kunststoffelementes 27, nämlich das Einlassventilsitzelement 10 und der Einlassventildeckel 13 mit Hochdruckdichtung 14 über eine ringförmige Sollbruchstelle 28, die als radiale Verbindung zwischen dem Einlassventildeckel bzw. dem Hochdruckdichtungsabschnitts des Einlassventildeckels 13 und dem Einlassventilsitzelement 10 ausgebildet ist, miteinander verbunden sind. Im Bereich der Sollbruchstelle 28 ragt hierzu das Einlassventilsitzelement 10 in axialer Richtung mit einem Ringfortsatz 29 in den Einlassventildeckel 16 hinein. Bei der Montage, also wenn das einteilige Kunststoffelement 27 und eine in dem Verdrängerraum 5 aufgenommene als Schraubendruckfeder ausgebildete Rückstellfeder 30 für den Pumpenkolben 4 aufeinander zu bewegt werden, bricht die Sollbruchstelle 28 auf, wird also aufgrund der wirkenden Kräfte getrennt, wodurch der Einlassventildeckel 13 um eine durch die Breite eines Spaltes 31 vorgegebene Strecke in Richtung auf das Einlassventilsitzelement 10 zu bewegt wird. In dieser, nicht gezeigten Endmontageposition liegt der Einlassventildeckel 13 mit seiner in Bezug auf den Verdrängerraumdurchmesser mit Übermaßgefestigten Hochdruckdichtung 14 axial an einer Stirnseite des Einlassventilsitzelementes 10 an und verbindet einen Bremsfluidaustritt aus dem Verdrängerraum 5 in radialer sowie in axialer Richtung. Anders ausgedrückt wird nach Durchtrennen der Sollbruchstelle 28 der zwischen der Stirnseite der Hochdruckdichtung 14 und der Stirnseite des Einlassventilsitzelementes 10 vorgesehene umfängliche, als Ringnut ausgebildete Spalt 31 überbrückt. Im Endmontagezustand wird die Hochdruckdichtung 14 des Einlassventilsitzelementes 10 von der Rückstellfeder 5 durch Abstützen an abschnittsweise gekrümmten bzw. schrägen Anlageflächen in radialer Richtung aufgeweitet, so dass eine Abdichtung nicht nur in axialer, sondern auch in radialer Richtung gewährleistet ist. Der endgültige Anpressdruck der Hochdruckdichtungen in radialer und axialer Richtung resultiert hauptsächlich aus dem Fluiddruck bei einem Kompressionshub des Pumpenkolbens 4.

Zur Montage eines als Schraubendruckfeder ausgebildeten Schließfederelementes 32 und eines hier kugelförmigen Schließkörpers 33 des Einlassventils 12 wird vor dem Aufeinanderzubewegen des bis dahin noch einteiligen Kunststoffelementes 27 und der Rückstellfeder 30, zumindest ein Umfangswandabschnitt 34 des topfförmigen Einlassventildeckels 33, in Pfeilrichtung 35 nach radial außen aufgebogen, so dass eine axiale Einführöffnung zum axialen Einführen des Schließfederelementes 32 und des Schließkörpers 33 in einem Bereich radial innerhalb des Einlassventildeckels 13 gebildet wird. Durch das Bilden bzw. Vergrößern dieser axialen Einführöffnung werden der Schließkörper 33 und daraufhin das Schließfederelement 32 in Pfeilrichtung 36 axial in den Einlassventildeckel 13 eingeführt, so dass der Schließkörpers 33 zur Anlage an dem stirnseitig an dem Einlassventilssitzelement 10 ausgebildeten, innenkonusförmigen Einlassventilsitz 37 kommt. Daraufhin verschwenkt der mindestens eine Umfangswandabschnitt 34 entgegen der Pfeilrichtung 35 wieder radial nach innen und das Schließfederelement 32 nimmt einen Zentralabschnitt 38 des Einlassventildeckels 13 in sich auf und verhindert somit ein erneutes Aufbiegen des Umfangswandabschnittes 34. Radial innerhalb des Zentralabschnitts 38 ist ein in axialer Richtung verlaufender, zentrischer Kanal 39 gebildet, durch den Bremsflüssigkeit bei geöffnetem Einlassventil 12 in den Verdrängerraum 5 strömen kann. Das Schließfederelement 32 stützt sich in axialer Richtung an einem ringförmigen Bodenabschnitt 40 des Einlassventildeckels 13 ab, um so den Schließkörper 33 gegen den Einlassventilsitz 37 federkraftbeaufschlagen zu können.

## Patentansprüche

1. Als Rückschlagventil ausgebildetes Einlassventil (12), insbesondere für eine hydraulische Bremsanlage eines Kraftfahrzeugs, mit einem einteiligen Kunststoffelement (27), umfassend einen Einlassventildeckel (13) und ein Einlassventilsitzelement (10), wobei der Einlassventildeckel (13) und das Einlassventilsitzelement (10) über eine Sollbruchstelle (28) miteinander verbunden sind und der Einlassventildeckel (13) mindestens zwei in Umfangsrichtung benachbarte Umfangswandabschnitte (34) aufweist, von denen zumindest einer zum Ausbilden eines ausreichend großen Montagequerschnittes zum insbesondere axialen Einführen eines Schließkörpers (33) und eines Schließfederelementes (32), vorzugsweise federelastisch, in radialer Richtung nach außen biegbar ist.

2. Einlassventil nach Anspruch 1, **dadurch gekennzeichnet, dass** das Kunststoffelement (27) als Spritzgussteil ausgebildet ist.

3. Einlassventil nach einem der Ansprüche 1 oder 2, **dadurch gekennzeichnet, dass** die Sollbruchstelle (28) derart ausgebildet und/oder angeordnet ist, dass diese bei der Montage der Kolbenpumpe, insbesondere beim Beaufschlagen mit einer Federkraft einer Rückstellfeder (30) für einen Pumpenkolben (4) der Kolbenpumpe (1), automatisch getrennt wird.

4. Einlassventil nach einem der vorhergehenden Ansprüche, **dadurch gekennzeichnet, dass** die Sollbruchstelle (28) als, insbesondere ausschließlich, radiale Verbindung zwischen dem Einlassventildeckel (13) und dem Einlassventilsitzelement (10) ausgebildet ist

5. Einlassventil nach einem der vorhergehenden Ansprüche, **dadurch gekennzeichnet, dass** die Sollbruchstelle (28) als umlaufender Ring ausgebildet oder aus mehreren in Umfangsrichtung beabstandeten Ringabschnitten gebildet ist.

6. Einlassventil nach einem der vorhergehenden Ansprüche, **dadurch gekennzeichnet, dass** der Einlassventildeckel (13) als Hochdruckdichtung (14) ausgebildet ist.

7. Kolbenpumpe für eine hydraulische Bremsanlage eines Kraftfahrzeugs mit einem Pumpenkolben (4), der zu einer axialen hin- und hergehenden Hubbewegung antreibbar ist, und mit einem als Rückschlagventil ausgebildeten Einlassventil (12).

8. Kolbenpumpe nach Anspruch 7, **dadurch gekennzeichnet, dass** das Schließfederelement (32) einen axial in Richtung des Schließfederelementes (32) weisenden Zentralabschnitt (38) des Einlassventildeckels (13) umschließend angeordnet ist.

9. Montageverfahren zur Montage eines als Rückschlagventil ausgebildeten Einlassventils (12) in eine Kolbenpumpe (1) einer hydraulischen Bremsanlage eines Kraftfahrzeugs nach einem der Ansprüche 7 oder 8, **gekennzeichnet durch** die Schritte:
• Form- und/oder reibschlüssiges Festlegen eines einteiligen Kunststoffelementes (27), umfassend einen Einlassventildeckel (13) und ein Einlassventilsitzelement (10), die über eine Sollbruchstelle (28) miteinander verbunden sind, an einem Pumpenkolben (4) der Kolbenpumpe (1);
• Mindestens ein Umfangswandabschnitt (34) des Einlassventildeckels (13) in radialer Richtung nach auβen Aufbiegen, um einen Schließkörper (33) und ein Schließfederelement (32) in axialer Richtung in den Einlassventildeckel (13) einzuschieben; und
• Aufeinanderzubewegen einer Rückstellfeder (30) für den Pumpenkolben (4) und des Kunststoffelementes (27) und dabei Trennen der Sollbruchstelle (28) des Kunststoffelementes (27).

## Claims

1. Inlet valve (12) which is designed as a check valve, in particular for a hydraulic brake system of a motor vehicle, having a single-piece plastic element (27), comprising an inlet valve cover (13) and an inlet valve seat element (10), the inlet valve cover (13) and the inlet valve seat element (10) being connected to one another via a predetermined breaking point (28), and the inlet valve cover (13) having at least two circumferential wall sections (34) which are adjacent in the circumferential direction and at least one of which, in order to form an adequately large assembly cross section for the in particular axial insertion of a closing body (33) and of a closing spring element (32), can be bent, preferably in a resiliently elastic manner, in the radially outward direction.

2. Inlet valve according to Claim 1, **characterized in that** the plastic element (27) is formed as an injection moulded part.

3. Inlet valve according to either of Claims 1 and 2, **characterized in that** the predetermined breaking point (28) is formed and/or arranged so as to be automatically severed during the assembly of the piston pump, in particular when acted on with a spring force of a restoring spring (30) for a pump piston (4) of the piston pump (1).

4. Inlet valve according to one of the preceding claims, **characterized in that** the predetermined breaking point (28) is formed as an in particular exclusively radial connection between the inlet valve cover (13) and the inlet valve seat element (10).

5. Inlet valve according to one of the preceding claims, **characterized in that** the predetermined breaking point (28) is formed as an encircling ring or is formed from a plurality of ring sections spaced apart from one another in the circumferential direction.

6. Inlet valve according to one of the preceding claims, **characterized in that** the inlet valve cover (13) is formed as a high-pressure seal (14).

7. Piston pump for a hydraulic brake system of a motor vehicle, having a pump piston (4) which can be driven so as to perform an axial reciprocating stroke movement, and having an inlet valve (12), which is designed as a check valve, according to one of the preceding claims.

8. Piston pump according to Claim 7, **characterized in that** the closing spring element (32) is arranged so as to surround a central section (38), which points axially in the direction of the closing spring element (32), of the inlet valve cover (13).

9. Assembly method for mounting an inlet valve (12) designed as a check valve into a piston pump (1) of a hydraulic brake system of a motor vehicle according to either of Claims 7 and 8, **characterized by** the steps:
• fixing a single-piece plastic element (27), which comprises an inlet valve cover (13) and an inlet valve seat element (10) connected to one another via a predetermined breaking point (28), in a positively locking and/or non-positively locking manner to a pump piston (4) of the piston pump (1);
• bending at least one circumferential wall section (34) of the inlet valve cover (13) open in the radially outward direction in order to insert a closing body (33) and a closing spring element (32) into the inlet valve cover (13) in the axial direction; and
• bringing a restoring spring (30) for the pump piston (4) and the plastic element (27) together, and in so doing severing the predetermined breaking point (28) of the plastic element (27).

## Revendications

1. Clapet d'admission (12) réalisé sous forme de clapet anti-retour, notamment pour une installation de frein hydraulique d'un véhicule automobile, avec un élément en plastique d'une seule pièce (27), comprenant un chapeau de clapet d'admission (13) et un élément de siège de clapet d'admission (10), le chapeau de clapet d'admission (13) et l'élément de siège de clapet d'admission (10) étant connectés l'un à l'autre par le biais d'une zone de rupture (28), et le chapeau de clapet d'admission (13) présentant au moins deux portions de paroi périphérique (34) adjacentes dans la direction périphérique, dont au moins l'une peut être fléchie de préférence élastiquement à ressort dans la direction radiale vers l'extérieur pour réaliser une section transversale de montage suffisamment grande pour introduire notamment axialement un corps de fermeture (33) et un élément de ressort de fermeture (32).

2. Clapet d'admission selon la revendication 1, **caractérisé en ce que** l'élément en plastique (27) est réalisé sous forme de pièce moulée par injection.

3. Clapet d'admission selon l'une quelconque des revendications 1 ou 2, **caractérisé en ce que** la zone de rupture (28) est réalisée et/ou est disposée de telle sorte qu'elle soit automatiquement séparée lors du montage de la pompe à piston, notamment lors de la sollicitation avec une force de ressort d'un ressort de rappel (30) pour un piston de pompe (4) de la pompe à piston (1).

4. Clapet d'admission selon l'une quelconque des revendications précédentes, **caractérisé en ce que** la zone de rupture (28) est réalisée sous forme de connexion radiale, notamment exclusivement radiale, entre le chapeau de clapet d'admission (13) et l'élément de siège de clapet d'admission (10).

5. Clapet d'admission selon l'une quelconque des revendications précédentes, **caractérisé en ce que** la zone de rupture (28) est réalisée sous forme de bague périphérique ou est formée de plusieurs segments de bague espacés dans la direction périphérique.

6. Clapet d'admission selon l'une quelconque des revendications précédentes, **caractérisé en ce que** le chapeau de clapet d'admission (13) est réalisé sous forme de joint d'étanchéité haute pression (14).

7. Pompe à piston pour une installation de frein hydraulique d'un véhicule automobile avec un piston de pompe (4) qui peut être entraîné en un mouvement de levage axial alternatif, et avec un clapet d'admission (12) réalisé sous forme de clapet anti-retour, selon l'une quelconque des revendications précédentes.

8. Pompe à piston selon la revendication 7, **caractérisée en ce que** l'élément de ressort de fermeture (32) est disposé de manière à entourer une portion centrale (38) du chapeau de clapet d'admission (13) tournée axialement dans la direction de l'élément de ressort de fermeture (32).

9. Procédé de montage pour le montage d'un clapet d'admission (12) réalisé sous forme de clapet anti-retour dans une pompe à piston (1) d'une installation de frein hydraulique d'un véhicule automobile selon l'une quelconque des revendications 7 ou 8, **caractérisé par** les étapes suivantes :
- fixer par engagement par correspondance géométrique ou par friction d'un élément en plastique d'une seule pièce (27), comprenant un chapeau de clapet d'admission (13) et un élément de siège de clapet d'admission (10), qui sont connectés l'un à l'autre par le biais d'une zone de rupture (28), sur un piston de pompe (4) de la pompe à piston (1) ;
- faire fléchir vers l'extérieur dans la direction radiale au moins une portion de paroi périphérique (34) du chapeau de clapet d'admission (13), afin d'insérer un corps de fermeture (33) et un élément de ressort de fermeture (32) dans la direction axiale dans le chapeau de clapet d'admission (13) ; et
- rapprocher un ressort de rappel (30) pour le piston de pompe (4) et l'élément en plastique (27) et séparer ainsi la zone de rupture (28) de l'élément en plastique (27).
